# EUROPÄISCHE PATENTSCHRIFT

(11) **EP 3 472 027 B1**
(45) Veröffentlichungstag und Bekanntmachung des Hinweises auf die Patenterteilung: **17.06.2020**
(21) Anmeldenummer: 17754120.8
(22) Anmeldetag: 04.08.2017
(51) Int. Cl.: G08G 1/14, B62D 15/02, G01C 21/34, G05D 1/02, G08G 1/015

(54) **VERFAHREN ZUM BETRIEB EINES KRAFTFAHRZEUGS**
METHOD FOR OPERATING A MOTOR VEHICLE
PROCÉDÉ POUR FAIRE FONCTIONNER UN VÉHICULE AUTOMOBILE

(30) Priorität: 29.08.2016 DE 102016216157
(43) Veröffentlichungstag der Anmeldung: 24.04.2019
(73) Patentinhaber: AUDI AG, 85045 Ingolstadt (DE)
(72) Erfinder: ALTINGER, Harald, 85049 Gerolfing (DE); SCHULLER, Florian, 85737 Ismaning (DE); FEIST, Christian, 85049 Ingolstadt (DE)
(86) Internationale Anmeldenummer: PCT/EP2017/069830
(87) Internationale Veröffentlichungsnummer: WO 2018/041532

(56) Entgegenhaltungen:
- DE-A1-102009 046 912
- DE-A1-102013 015 348
- DE-A1-102014 221 764
- US-A1- 2013 231 824

## Beschreibung

Die Erfindung betrifft ein Verfahren zum Betrieb eines Kraftfahrzeugs. Daneben betrifft die Erfindung ein Kraftfahrzeug und eine Speichereinrichtung.

Sollen bestimmte Fahrmanöver in Kraftfahrzeugen automatisiert oder assistiert durchgeführt werden oder sollen einem Fahrer Fahranweisungen gegeben werden, kann dies anhand einer vorgegebenen Trajektorie erfolgen, der das Kraftfahrzeug folgen soll. Es ist hierbei bekannt, dass Trajektorien durch Kraftfahrzeuge in einem normalen Betrieb gelernt werden, das heißt, dass eine durch einen Fahrer gefahrene Trajektorie im Kraftfahrzeug zur späteren Verwendung gespeichert werden kann.

Ein entsprechendes Vorgehen ist beispielsweise aus der Druckschrift DE 10 2014 018 189 A1 bekannt. Gemäß dieser Druckschrift kann eine angelernte, mit zusätzlichen Attributen angereicherte Trajektorie als Vorlage für einen automatischen Fahrbetrieb des Kraftfahrzeugs während eines Parkvorgangs dienen.

Die Druckschrift US 2013/0231824 A1 betrifft ein Verfahren zum automatisierten Parken von Fahrzeugen mit Hilfe künstlicher Intelligenz. Ein GPS-System von autonom fahrenden Kraftfahrzeugen kann genutzt werden, um Routen zu erlernen. Hierbei können Informationen über im Rahmen der Route genutzte Straßen an andere Fahrzeuge bereitgestellt werden, um diese bei der Routenplanung zu unterstützen. Der nächstliegende Stand der Technik ist in der US 2013/231824 A1 zu sehen.

Das Anlernen abzufahrender Trajektorien ist besonders bei einem Fahrbetrieb des Kraftfahrzeugs auf Privatgrundstücken vorteilhaft. Problematisch ist jedoch, dass beispielsweise in dem Fall, wenn mehrere verschiedene Kraftfahrzeuge auf einem Privatgrundstück geparkt werden sollen, für jedes dieser Kraftfahrzeuge entsprechende Trajektorien separat gelernt werden müssen.

Der Erfindung liegt somit die Aufgabe zugrunde, ein Verfahren anzugeben, durch das der Anlernaufwand bei einer Nutzung mehrerer Kraftfahrzeuge, die bestimmte Fahrvorgänge durchführen sollen, reduziert werden kann.

Die Aufgabe wird erfindungsgemäß durch ein Verfahren zum Betrieb eines Kraftfahrzeugs gelöst, das die folgenden Schritte umfasst:
- Ermitteln wenigstens eines eine jeweilige gefahrenen Trajektorie eines jeweiligen weiteren Kraftfahrzeugs beschreibenden Bahndatensatzes und senden des Bahndatensatzes an eine fahrzeugexterne Speichereinrichtung, wobei bei der Ermittlung des Bahndatensatzes zusätzlich ein die Fahrzeuggeometrie des die Trajektorie befahrenden Kraftfahrzeugs beschreibender Fahrgeometrieparameter erfasst und an die Speichereinrichtung gesendet wird,
- Bereitstellen wenigstens eines Führungsdatensatzes für das Kraftfahrzeug durch die Speichereinrichtung, wobei jeder Führungsdatensatz einer der Trajektorien zugeordnet ist und in Abhängigkeit des die jeweilige zugeordnete Trajektorie beschreibenden Bahndatensatzes ermittelt wird, und
- Ansteuern der Fahrzeugeinrichtung des Kraftfahrzeugs in Abhängigkeit des bereitgestellten Führungsdatensatzes oder, falls mehrere der Führungsdatensätze durch die Speichereinrichtung bereitgestellt werden, eines kraftfahrzeugseitig ausgewählten der bereitgestellten Führungsdatensätze zur Ausgabe eines die zugeordnete Trajektorie betreffenden Fahrhinweises an einen Fahrer des Kraftfahrzeugs und/oder zur Durchführung wenigstens eines Fahreingriffs,
wobei die Ermittlung des wenigstens einen Führungsdatensatzes und/oder die Steuerung der Fahrzeugeinrichtung in Abhängigkeit des Fahrgeometrieparameters erfolgt.

Erfindungsgemäß wird somit vorgeschlagen, eine angelernte Trajektorie beziehungsweise einen diese Trajektorie beschreibenden Bahndatensatz nicht oder zumindest nicht ausschließlich lokal in dem Kraftfahrzeug, das zum Durchfahren der Trajektorie genutzt wurde, zu speichern. Vielmehr erfolgt die Speicherung des Bahndatensatzes auf einer fahrzeugexternen Speichereinrichtung. Zu einem späteren Zeitpunkt kann ein Führungsdatensatz, der dem Bahndatensatz entsprechen kann oder aus diesem berechnet wird, an das gleiche und/oder wenigstens ein anderes Kraftfahrzeug bereitgestellt werden.

Der Bahndatensatz, also die aus der gefahrenen Trajektorie resultierenden Bahndaten, können somit nicht nur durch das Kraftfahrzeug genutzt werden, das zum Anlernen der Trajektorie genutzt wurde, sondern auch durch weitere Kraftfahrzeuge. Wie später noch detailliert erläutert werden wird, ist es hierbei möglich, dass bei der Bereitstellung des Führungsdatensatzes und/oder bei der Ansteuerung der Fahrzeugeinrichtung die Fahrzeuggeometrie des den Führungsdatensatz empfangenden Kraftfahrzeugs und/oder die Fahrzeuggeometrie des Kraftfahrzeugs, mit dem die Trajektorie ursprünglich gefahren wurde, berücksichtigt werden. Hierdurch ist es möglich, die gelernten Trajektorien unabhängig von der Fahrgeometrie des konkret genutzten Kraftfahrzeugs zu nutzen. Durch das erfindungsgemäße Verfahren ist es somit ausreichend, eine Trajektorie mit einem Kraftfahrzeug anzulernen, wonach der ermittelte Bahndatensatz bei der Führung des gleichen oder anderer Kraftfahrzeuge zukünftig weiter verwendet werden kann.

Die fahrzeugexterne Speichereinrichtung kann hierbei zum Speichern von Bahndatensätzen einer Vielzahl von Kraftfahrzeugen und/oder Benutzern beziehungsweise zum Bereitstellen von Führungsdatensätzen für eine Vielzahl von Kraftfahrzeugen mit jeweiligen Benutzern dienen. Um eine automatische Auswahl von Führungsdatensätzen zu ermöglichen beziehungsweise eine manuelle Auswahl durch einen Benutzer zu erleichtern, können mehrere Ansätze genutzt werden. Beispielsweise können Bahndatensätze jeweils bestimmten Benutzern zugeordnet werden, so dass sie in allen Kraftfahrzeugen, die durch diesen Benutzer genutzt werden, nutzbar sind. Es ist aber auch möglich, dass Benutzer Bahndatensätze für andere Benutzer bereitstellen. Es ist zudem möglich, dass in Abhängigkeit des bisherigen Fahrbetriebs, insbesondere der momentanen Kraftfahrzeugposition, bereits eine Untergruppe der Trajektoren bzw. der zugeordneten Führungsdatensätze ausgewählt wird, aus der anschließend automatisch oder durch einen Benutzer gewählt wird. Insbesondere um eine Auswahl durch einen Benutzer zu erleichtern, können den einzelnen Trajektorien im Rahmen der Ermittlung des Bahndatensatzes oder im Nachhinein Klarnamen, beispielsweise als Textstring, zugeordnet werden, die einem Benutzer im Rahmen der Auswahl einer zu fahrenden Trajektorie beispielsweise angezeigt werden können. Alternativ wäre es beispielsweise möglich, die einzelnen Trajektorien durch Zielorte oder durch Bezeichnungen von aus Kartendaten ermittelten relevanten Objekten im Umfeld der Trajektorie zu kennzeichnen.

Die Speichereinrichtung kann auch derart ausgebildet sein, dass sie mehrere, beispielsweise über ein Netzwerk verbundene, Elemente umfasst. Beispielsweise kann die Speichereinrichtung in Form eines Cloud-Speichers ausgebildet sein.

Im erfindungsgemäßen Verfahren können Bahndatensätze für mehrere Trajektorien ermittelt werden, wobei den Trajektorien jeweils wenigstens eine Positionsinformation zugeordnet wird, die wenigstens eine der Trajektorien zugeordnete Position beschreibt, wobei ein Auswahlkriterium, das zur Auswahl der wenigstens einen Trajektorie, zu der ein jeweiliger zugeordneter Führungsdatensatz ermittelt und bereitgestellt wird, und/oder zur Auswahl des zur Steuerung der Fahrzeugeinrichtung verwendeten Führungsdatensatzes verwendet wird, von den Positionsinformationen abhängt. Die Positionsinformation kann einen Start- und/oder Endpunkt der Trajektorie und/oder weitere Wegpunkte der Trajektorie beschreiben. Hierbei ist es auch möglich, dass Abstandsgrenzen fest vorgegeben oder als Teil der Positionsinformation ermittelt werden, wobei das Auswahlkriterium insbesondere auswertet, ob sich eine Eigenposition des Kraftfahrzeugs innerhalb dieser Abstandsgrenzen befindet. Die mehreren Bahndatensätze können insbesondere durch verschiedene Kraftfahrzeuge ermittelt werden.

Durch eine Positionserfassungseinrichtung des Kraftfahrzeugs kann eine die Egoposition des Kraftfahrzeug beschreibende Egopositionsinformation ermittelt werden, wobei das Auswahlkriterium zusätzlich von der Egopositionsinformation abhängt. Die Ermittlung der Egopositionsinformation kann beispielsweise durch ein satellitengestütztes Positionsbestimmungssystem, beispielsweise einen GPS-Sensor, erfolgen. Ein Führungsdatensatz kann gewählt beziehungsweise für eine Trajektorie ermittelt werden, wenn die zugeordnete Positionsinformation eine Position beschreibt, die von der Egoposition um weniger als einen vorgegebenen Grenzwert beabstandet ist. Es können somit Trajektorien gewählt werden, zu denen Führungsdatensätze bestimmt werden, die Wegpunkte, insbesondere Anfangspunkte, aufweisen, die nahe an der Egoposition des Kraftfahrzeugs liegen und somit für die folgende Führung des Kraftfahrzeugs besonders relevant sind beziehungsweise es kann ein Führungsdatensatz ausgewählt werden, der einer entsprechenden Trajektorie zugeordnet ist.

Die Positionsinformationen können jeweils eine Zielposition beschreiben, an der die jeweilige Trajektorie endet, wobei das Auswahlkriterium von den Zielpositionen abhängt. Eine entsprechende Auswertung ist dann voreilhaft, wenn ein Benutzer vorgibt, dass das Kraftfahrzeug zu einem bestimmten Ziel geführt werden soll, da in diesem Fall nur jene Trajektorien ausgewählt werden können, die entsprechende Zielpositionen aufweisen. Es ist auch möglich, dass überprüft wird, ob eine Zielposition einer Trajektorie, beispielsweise durch ein weiteres Kraftfahrzeugs, bereits belegt ist. In diesem Fall soll das eigene Kraftfahrzeug nicht zu dieser Zielposition geführt werden, weshalb entsprechende Trajektorien nicht berücksichtigt werden können.

Das Auswahlkriterium kann zusätzlich von einer an einer Bedieneinrichtung des Kraftfahrzeugs erfassten Bedieneingabe eines Benutzers abhängen. Beispielsweise kann ein Benutzer aus mehreren angebotenen Trajektorien beziehungsweise diesen zugeordneten Zielpositionen wählen, wobei eine entsprechende Auswahl entweder an die Speichereinrichtung bereitgestellt werden kann, um die Auswahl jener Trajektorien vorzugeben, zu denen Führungsdatensätze bereitgestellt werden sollen, oder innerhalb des Kraftfahrzeugs weiterverarbeitet werden kann, um einen von mehreren bereitgestellten Führungsdatensätzen auszuwählen.

Im erfindungsgemäßen Verfahren kann eine Beleginformation ermittelt werden, die eine durch ein zu berücksichtigendes Kraftfahrzeug belegte Position beschreibt, wonach die Auswahl der wenigstens einen Trajektorie, zu der ein zugeordneter Führungsdatensatz ermittelt und bereitgestellt wird, und/oder die Auswahl des zur Steuerung der Fahrzeugeinrichtung verwendeten Führungsdatensatzes von der Beleginformation abhängt. Ein derartiges Vorgehen kann beispielsweise genutzt werden, wenn von der momentanen Kraftfahrzeugposition ausgehend mehrere Trajektorien mit unterschiedlichen Zielpositionen, beispielsweise Trajektorien zu unterschiedlichen Parkplätzen, fahrbar sind, wobei einige der Zielpositionen, also beispielsweise der Parkplätze, belegt sein können. In diesem Fall können beispielsweise ausschließlich Führungsdatensätze ermittelt und bereitgestellt werden, die zur Führung des Kraftfahrzeugs zu einer der freien Zielpositionen, also beispielsweise zu einem freien Parkplatz, dienen. Alternativ ist es beispielsweise möglich, dass zunächst Führungsdatensätze für alle Zielpositionen an das Kraftfahrzeug bereitgestellt werden, wonach in Abhängigkeit der Beleginformation ein Führungsdatensatz hieraus ausgewählt werden kann, durch den das Kraftfahrzeug zu einer freien Zielposition geführt werden kann. Es ist selbstverständlich auch möglich, auch für andere Positionen als die Zielposition zu ermitteln, ob diese belegt sind. Beispielsweise kann in Abhängigkeit der Beleginformation erfasst werden, ob eines oder mehrere Segmente einer Trajektorie belegt sind und es kann ein Führungsdatensatz zu einer Trajektorie ermittelt beziehungsweise ein solcher Führungsdatensatz ausgewählt werden, bei dem kein Segment der Trajektorie durch ein weiteres zu berücksichtigendes Kraftfahrzeug belegt ist.

Die Beleginformation kann durch das zu berücksichtigende Kraftfahrzeug selbst bereitgestellt werden. Die Bereitstellung kann direkt an das Kraftfahrzeug, beispielsweise durch eine Car2Car-Kommunikation, oder die Speichereinrichtung oder über wenigstens eine weitere Einrichtung erfolgen. Beispielsweise kann das zu berücksichtigende Kraftfahrzeug seine aktuelle Position an die Speichereinrichtung bereitstellen, so dass diese direkt im Rahmen der Ermittlung und Bereitstellung des wenigstens einen Führungsdatensatzes für das Kraftfahrzeug berücksichtigt oder an das Kraftfahrzeug übermittelt werden kann, um dort bei der Auswahl eines Führungsdatensatzes zur Ansteuerung der Fahrzeugeinrichtung zu dienen. Das zu berücksichtigende Kraftfahrzeug kann seine Position beispielsweise über ein satellitenbasiertes Navigationsbestimmungssystem bestimmen. Alternativ ist es auch möglich, dass die Beleginformation durch Sensoren ermittelt wird und an das Kraftfahrzeug beziehungsweise die Speichereinrichtung bereitgestellt wird. Hierbei können Sensoren des Kraftfahrzeugs, des zu berücksichtigenden Kraftfahrzeugs und/oder infrastrukturseitige Sensoren genutzt werden. Beispielsweise kann eine Sensorik eines Parkhauses genutzt werden, die eine Belegung wenigstens eines Parkplatzes ermittelt.

Der Bahndatensatz und/oder der Führungsdatensatz können jeweils für wenigstens ein Segment der Trajektorie Koordinaten eines Anfangs- und/oder eines Endpunktes des jeweiligen Segments und/oder eine Bahnkrümmung und/oder einen Lenkwinkel in dem jeweiligen Segment beschreiben. Es ist somit nicht erforderlich, dass die Trajektorie durch hochaufgelöste Ortsdaten beschrieben wird, sondern sie kann durch mehrere Wegpunkte beschrieben sein, die beispielsweise über eine vorgegebene Bahnkrümmung beziehungsweise einen vorgegebenen Lenkwinkel verbunden sind.

Es ist möglich, dass der Zusammenhang zwischen dem Bahndatensatz beziehungsweise dem Führungsdatensatz und der Form der Trajektorie von der konkreten Fahrzeuggeometrie des Kraftfahrzeugs beziehungsweise des weiteren Kraftfahrzeugs abhängt. Wird ein Trajektoriensegment beispielsweise durch den genutzten beziehungsweise zu nutzenden Lenkwinkel beschrieben, so hängt die resultierende Form der Trajektorie beispielsweise vom Achsabstand ab. Es ist daher möglich, dass im Rahmen des erfindungsgemäßen Verfahrens die Ermittlung des wenigstens einen Führungsdatensatzes und/oder die Steuerung der Fahrzeugeinrichtung zusätzlich in Abhängigkeit wenigstens eines eine Fahrgeometrie des Kraftfahrzeugs betreffenden weiteren Fahrgeometrieparameters erfolgen. Wird der Führungsdatensatz in Abhängigkeit des weiteren Fahrgeometrieparameters ermittelt, so kann dieser vorangehend an die Speichereinrichtung bereitgestellt werden. Dies kann durch das Kraftfahrzeug erfolgen, beispielsweise im Rahmen einer Abfrage von Führungsdatensätzen oder einer Anmeldung des Kraftfahrzeugs an der Speichereinrichtung, beispielsweise bei einem Starten des Kraftfahrzeugs. Alternativ kann der weitere Fahrgeometrieparameter vorangehend auf die Speichereinrichtung gespeichert werden. Beispielsweise kann der weitere Fahrgeometrieparameter durch einen Nutzer an die Speichereinrichtung bereitgestellt werden, insbesondere über ein Webinterface. Alternativ ist es möglich, dem Fahrzeug zugeordnete weitere Fahrgeometrieparameter vor der Bereitstellung des Kraftfahrzeugs an einen Nutzer auf der Speichereinrichtung abzulegen. Dies kann beispielsweise erfolgen, wenn die Speichereinrichtung durch einen Kraftfahrzeughersteller betrieben wird oder dieser weitere Fahrgeometrieparameter für die Speichereinrichtung bereitstellt. Die Berücksichtigung des weiteren Fahrgeometrieparameters ermöglicht es, Bahndatensätze zu nutzen, die durch ein Kraftfahrzeug mit einer anderen Fahrgeometrie erfasst wurden.

Der weitere Fahrgeometrieparameter kann einen Achsabstand und/oder einen Wendekreis und/oder einen maximalen Lenkwinkel des Kraftfahrzeugs beschreiben. Wie bereits erläutert, ist der Achsabstand wesentlich für den Zusammenhang zwischen Trajektorie und Lenkwinkel. Ein Wendekreis beziehungsweise ein Maximallenkwinkel des Kraftfahrzeugs kann einschränken, welche der erfassten Trajektorien überhaupt durch das Kraftfahrzeug fahrbar sind. Diese Parameter können somit insbesondere im Rahmen der Auswahl der Trajektorie, zu der ein Führungsdatensatz bereitgestellt wird, beziehungsweise in Abhängigkeit der die Ansteuerung der Fahrzeugeinrichtung erfolgt, dienen, da Trajektorien verworfen werden können, die durch das eigene Kraftfahrzeug nicht fahrbar sind.

Bei der Ermittlung des Bahndatensatzes wird ein die Fahrzeuggeometrie des die Trajektorie befahrenden Kraftfahrzeugs beschreibender Fahrgeometrieparameter erfasst und an die Speichereinrichtung gesendet, wonach die Ermittlung des wenigstens einen Führungsdatensatzes und/oder die Steuerung der Fahrzeugeinrichtung in Abhängigkeit des Fahrgeometrieparameters erfolgt. Wird beispielsweise im Rahmen des Bahndatensatzes ein Lenkwinkel erfasst, kann mit Hilfe des Fahrgeometrieparameters eine tatsächliche Bahnkrümmung der Trajektorie beziehungsweise des Trajektoriensegments bestimmt werden, womit der Bahndatensatz auch durch Kraftfahrzeuge mit anderen Fahrzeuggeometrien nutzbar ist.

Es können mehrere Bahndatensätze für mehrere Trajektorien ermittelt werden, wobei den Bahndatensätzen jeweils wenigstens eine von mehreren Benutzerkennungen zugeordnet wird, wobei einem Benutzer des Kraftfahrzeugs eine dieser Benutzerkennungen zugeordnet ist, die durch das Kraftfahrzeug erfasst wird, wonach im Rahmen der Bereitstellung der Führungsdaten ausschließlich Bahndaten berücksichtigt werden, die der erfassten Benutzerkennung oder wenigstens einer weiteren vorgegebenen Benutzerkennung zugeordnet sind. Eine Erfassung der Benutzerkennung kann beispielsweise dadurch erfolgen, dass diese aus einer dem Fahrer zugeordneten Einrichtung, beispielsweise einem Fahrzeugschlüssel mit integriertem Transceiver oder einem mobilen Kommunikationsgerät, ausgelesen wird. Alternativ ist es möglich, dass der Benutzer die Benutzerkennung durch eine Bedieneingabe an einer kraftfahrzeugseitigen Bedieneinrichtung, beispielsweise durch die Auswahl eines Profils, wählt. Die vorgegebene Benutzerkennung kann Bahndatensätzen zugeordnet sein, die öffentlich sind. Es ist jedoch auch möglich, dass Benutzer die gesamten ihnen zugeordneten Bahndatensätze oder Teile hiervon an andere Benutzer bereitstellen.

Vorzugsweise wird auch bei der Erfassung der Bahndaten durch das jeweilige Kraftfahrzeug eine Benutzerkennung erfasst und die erfassten Bahndaten werden dieser Benutzerkennung zugeordnet. Eine Bereitstellung eigener Bahndaten an weitere Benutzer kann beispielsweise über ein Webinterface erfolgen. Die Zuordnung von Bahndaten zu einer Benutzerkennung ermöglicht es, dass einem Benutzer stets die durch ihn selbst angelernten Bahndatensätze zur Verfügung stehen, unabhängig davon, welches Kraftfahrzeug er gerade benutzt.

Ergänzend oder alternativ hierzu ist es möglich, dass wenigstens eine Gruppe von Trajektorien, deren Bahndaten auf der Speichereinrichtung gespeicherten sind, einer bestimmten Infrastruktureinrichtung oder einem bestimmten Gebiet zugeordnet ist, wobei durch die oder eine Positionserfassungseinrichtung des Kraftfahrzeugs ermittelt wird, ob sich das Kraftfahrzeug in dem Gebiet oder in einem der Infrastruktureinrichtung zugeordnetem Bereich befindet, wobei in diesem Fall alle der Gruppe der Trajektorien zugeordneten Führungsdatensätze an das Kraftfahrzeug übermittelt werden und/oder im Rahmen der Bereitstellung der Führungsdatensätze ausschließlich Trajektorien berücksichtigt werden, die der Gruppe angehören. Das beschriebene Vorgehen ermöglicht es einerseits, öffentliche Bahndatensätze, beispielsweise für das Einparken in einem Parkhaus oder auf einem Parkplatz, an eine Vielzahl von Kraftfahrzeugen bereitzustellen. Andererseits erleichtert es die Auswahl von Bahndatensätzen, da jeweils nur zwischen den dem Gebiet beziehungsweise dem Bereich zugeordnete Bahndatensätzen ausgewählt werden muss. Erfolgt eine Auswahl der Trajektorien beziehungsweise der Führungsdatensätze, die durch das Kraftfahrzeug genutzt werden, beispielsweise manuell in Abhängigkeit einer der Trajektorie zugeordneten Bezeichnung oder einer Zielposition, so können nur jene Trajektorien zur Auswahl gestellt werden, die dem Bereich beziehungsweise dem Gebiet zugeordnet sind.

Neben dem erfindungsgemäßen Verfahren betrifft die Erfindung ein Kraftfahrzeug, das zur Teilnahme an dem erfindungsgemäßen Verfahren als das Kraftfahrzeug und/oder als das weitere Kraftfahrzeug eingerichtet ist. Das Kraftfahrzeug umfasst insbesondere eine Kommunikationseinrichtung zur Kommunikation mit der Speichereinrichtung und eine Steuereinrichtung zur Steuerung der Kommunikationseinrichtung und der Fahrzeugeinrichtung. Durch die Steuereinrichtung ist die Kommunikationseinrichtung und die Fahrzeugeinrichtung zur Durchführung des erfindungsgemäßen Verfahrens steuerbar.

Zudem betrifft die Erfindung eine Speichereinrichtung, die zur Teilnahme an dem erfindungsgemäßen Verfahren als die Speichereinrichtung eingerichtet ist. Die Speichereinrichtung kann wenigstens eine Recheneinrichtung oder ein Netz von Recheneinrichtungen mit jeweils zugeordnetem Speicher und eine Kommunikationseinrichtung zur Kommunikation mit dem Kraftfahrzeug beziehungsweise dem weiteren Kraftfahrzeug aufweisen. Durch die Recheneinrichtung oder Recheneinrichtungen können Führungsdatensätze für eine Vielzahl von Benutzern bereitgestellt werden, denen jeweils eine Benutzerkennung zugeordnet ist, die eine Zuordnung der zugeordneten Bahndaten zu bestimmten Benutzern wie vorangehend erläutert ermöglicht. Die Recheneinrichtung beziehungsweise die Recheneinrichtungen können die Führungsdatensätze in Abhängigkeit der Bahndatensätze ermitteln.

Das erfindungsgemäße Kraftfahrzeug und die erfindungsgemäße Speichereinrichtung sind selbstverständlich mit den zu dem erfindungsgemäßen Verfahren erläuterten Merkmalen fortbildbar und umgekehrt.

Vorteile und Einzelheiten der Erfindung ergeben sich aus dem folgenden Ausführungsbeispiel und der zughörigen Zeichnung, die die Nutzung eines Ausführungsbeispiels der erfindungsgemäßen Speichereinrichtung und eines Ausführungsbeispiels des erfindungsgemäßen Kraftfahrzeugs in einem Ausführungsbeispiel des erfindungsgemäßen Verfahrens illustriert.

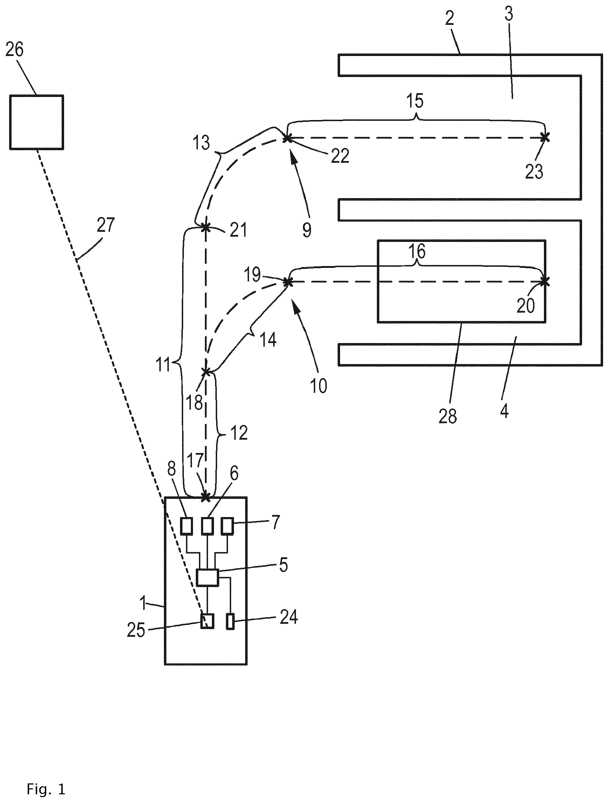

In der in der Figur gezeigten Situation soll das Kraftfahrzeug 1 in der Garage 2 eingeparkt werden. Die Garage 2 ist eine Doppelgarage mit zwei Parkplätzen 3, 4. Das Kraftfahrzeug 1 weist eine Steuereinrichtung 5 auf, durch die mehrere Fahrzeugeinrichtungen 6, 7 angesteuert werden können, um das Kraftfahrzeug automatisiert oder assistiert entlang zuvor angelernter Trajektorien 9, 10 zu führen. Die Fahrzeugeinrichtung 6 ist ein Motor des Kraftfahrzeugs 1 und die Fahrzeugeinrichtung 7 eine Lenkung des Kraftfahrzeugs 1. Zudem steuert die Steuereinrichtung 5 nicht gezeigte Bremsen des Kraftfahrzeugs 1. Ist eine zumindest teilweise manuelle Führung des Kraftfahrzeugs 1 gewünscht, kann die Steuereinrichtung 5 die Fahrzeugeinrichtung 8, eine Anzeigeeinrichtung, ansteuern, um dem Fahrer Fahrhinweise zu geben. Somit kann dem Fahrer bei dem Führen des Kraftfahrzeugs entlang der zuvor angelernten Trajektorie 9, 10 assistiert werden.

Das im Folgenden erläuterte Verfahren zeichnet sich dadurch aus, dass das Kraftfahrzeug 1 nicht nur entlang Trajektorien 9, 10 geführt werden kann, die im Rahmen einer Fahrt des Kraftfahrzeugs 1 selbst angelernt wurden, sondern dass auch die Führung entlang von Trajektorien 9, 10 möglich ist, die durch ein weiteres Kraftfahrzeug angelernt wurden. Zur einfachen Darstellung des Verfahrens wird in der folgenden Erläuterung davon ausgegangen, dass die durch das Kraftfahrzeug 1 angelernten Trajektorien auch im Rahmen der Führung des Kraftfahrzeugs 1 genutzt werden. Soweit eine Anpassung des Verfahrens erforderlich ist, wenn ein weiteres Kraftfahrzeug zum Anlernen der Trajektorien genutzt wird, wird an den entsprechenden Textstellen darauf hingewiesen.

Das Verfahren beginnt damit, dass die anzulernenden Trajektorien 9, 10 durch einen nicht gezeigten Fahrer des Kraftfahrzeugs 1 manuell abgefahren werden. Die Trajektorie 9 dient zum Parken des Kraftfahrzeugs 1 auf dem Parkplatz 3 und die Trajektorie 10 zum Parken des Kraftfahrzeugs 1 auf dem Parkplatz 4. Aus Übersichtlichkeitsgründen sind im gezeigten Beispiel relativ einfache Trajektorien 9, 10 dargestellt, die jeweils aus drei Segmenten bestehen. In den Segmenten 11, 12 bewegt sich das Kraftfahrzeug 1 geradeaus, in den Segmenten 13, 14 wird eine Rechtskurve mit konstantem Lenkwinkel gefahren und in den Segmenten 15, 16 wird das Kraftfahrzeug 1 wiederum geradeaus bewegt. Die Bahndaten für die Trajektorien 9, 10 beschreiben für jedes der Segment 11 bis 16 der Trajektorien 9, 10 jeweils die Koordinaten der Anfangs- beziehungsweise Endpunkte 17 bis 23 der Segmente 11 bis 16 sowie den jeweiligen durch das Kraftfahrzeug 1 genutzten Lenkwinkel. Alternativ wäre es möglich, statt dem Lenkwinkel die Bahnkrümmung zu ermitteln, die aus dem Lenkwinkel berechnet werden kann.

Die Endpunkte 20, 23 der Segmente 15, 16 entsprechen den jeweiligen Zielpunkten der Trajektorien 9, 10, zu denen das Kraftfahrzeug geführt werden soll. Die Anfangs- und Endpunkte 17 bis 23 sind in der Figur derart dargestellt, dass sie bei Erreichen des entsprechenden Punkts durch das Kraftfahrzeugs 1 jeweils einem vorderen Mittelpunkt des Kraftfahrzeugs 1 entsprechen. In einer realen Umsetzung werden die Kraftfahrzeugpositionen durch eine Positionsbestimmungseinrichtung 24, beispielsweise einen GPS-Sensor, bestimmt. In diesem Fall können die jeweiligen Positionen dieser Positionsbestimmungseinrichtung gespeichert werden, die gegenüber der vorderen Fahrzeugmitte verschoben sind.

Nach dem Fahren der Trajektorie wird jeweils der Bahndatensatz, der die Trajektorie wie erläutert beschreibt, durch die Kommunikationseinrichtung 25 des Kraftfahrzeugs über die drahtlose Kommunikationsverbindung 27 an eine fahrzeugexterne Speichereinrichtung 26 übertragen. Zusätzlich zu dem Bahndatensatz können Fahrgeometrieparameter übertragen werden, die die Fahrgeometrie des Kraftfahrzeugs 1 beschreiben. Beispielsweise kann ein Achsabstand des Kraftfahrzeugs 1 übertragen werden. Dieser kann im weiteren Verfahrensverlauf zur Berechnung einer Bahnkrümmung der Segmente 11 bis 16 aus den jeweiligen Lenkwinkeln beziehungsweise zur Berechnung eines Lenkwinkels, den ein Kraftfahrzeug mit einer anderen Fahrzeuggeometrie nutzen müsste, um eine entsprechende Bahnkrümmung zu erreichen, verwendet werden. Eine entsprechende Berechnung kann durch die Speichereinrichtung 26, insbesondere bei einem im Folgenden erläuterten Abrufen von Führungsdatensätzen durch das Kraftfahrzeug 1, oder durch das empfangende Kraftfahrzeug im Rahmen der Steuerung einer Fahrzeugeinrichtung erfolgen.

Die angelernten Trajektorien 9, 10 können anschließend durch das Kraftfahrzeug 1 oder ein beliebiges anderes Kraftfahrzeug genutzt werden. Hierbei ist es, wie erläutert, möglich, unterschiedliche Fahrzeuggeometrien der Kraftfahrzeuge zu berücksichtigen. Zur Nutzung durch das Kraftfahrzeug stellt die Speichereinrichtung 26 an das Kraftfahrzeug 1 über die Kommunikationseinrichtung 25 des Kraftfahrzeugs wenigstens einen Führungsdatensatz bereit, der jeweils einer der Trajektorien 9, 10 zugeordnet ist und in Abhängigkeit des die jeweilige zugeordnete Trajektorie 9, 10 beschreibenden Bahndatensatz ermittelt wird.

Im einfachsten Fall kann der Führungsdatensatz zu dem Bahndatensatz identisch sein. Beispielsweise kann der Führungsdatensatz die zuvor gespeicherten Koordinaten der Anfangs- und Endpunkte 17 bis 23 der Segment 11 bis 16 sowie die zugehörigen Lenkradien für eine der Trajektorien 9, 10 umfassen. Vorzugsweise wird jedoch bereits im Rahmen der Ermittlung des Führungsdatensatzes berücksichtigt, dass die Kraftfahrzeuge unterschiedliche Fahrgeometrien, also beispielsweise unterschiedliche Achsabstände, Wendekreise und/oder maximale Lenkwinkel, aufweisen können. Hierzu kann das Kraftfahrzeug 1 im Rahmen einer Anmeldung an der Speichereinrichtung 26, beispielsweise bei einem Starten des Kraftfahrzeugs 1, oder im Rahmen einer Abfrage des wenigstens einen Führungsdatensatzes, Fahrgeometrieparameter des Kraftfahrzeugs an die Speichereinrichtung 26 übertragen, die diese im Rahmen der Ermittlung des wenigstens einen Führungsdatensatzes berücksichtigt. Beispielsweise können keine Führungsdatensätze für Trajektorien bereitgestellt werden, die durch das Kraftfahrzeug 1 aufgrund seines maximalen Lenkwinkels beziehungsweise seines Wendekreises nicht fahrbar sind. Zudem kann ein im Rahmen des Führungsdatensatzes übermittelter Lenkwinkel in Abhängigkeit des Fahrgeometrieparameters berechnet werden.

In der Figur werden nur zwei Trajektorien 9, 10 dargestellt, für die Bahndaten auf der Speichereinrichtung 26 gespeichert werden. Da die Speichereinrichtung 26 jedoch als Speichereinrichtung für eine Vielzahl von Kraftfahrzeugen dienen kann, ist es möglich, dass Bahndaten für eine sehr große Zahl von Trajektorien 9, 10 auf der Speichereinrichtung 26 gespeichert sind. Es soll daher nicht zu jeder Trajektorie, zu der Bahndaten vorliegen, ein Führungsdatensatz generiert und an das Kraftfahrzeug 1 gesendet werden. Die Menge der ermittelten und gesendeten Führungsdatensätze kann auf vielfältige Weise reduziert werden. Beispielsweise kann im Rahmen der Ermittlung des Bahndatensatzes dieser jeweils mit einer Benutzerkennung verknüpft werden, die einen Benutzer des Kraftfahrzeugs beschreibt. Eine entsprechende Benutzerkennung kann beispielsweise durch einen personalisierten Fahrzeugschlüssel oder eine mobile Kommunikationseinrichtung automatisch oder durch eine manuelle Eingabe des Benutzers an einer Bedieneinrichtung des Kraftfahrzeugs 1 an das Kraftfahrzeug 1 bereitgestellt werden und gemeinsam mit den Bahndaten an die Speichereinrichtung 26 übertragen werden. Anschließend können nur Führungsdatensätze an das Kraftfahrzeug 1 bereitgestellt werden, die Trajektorien zugeordnet sind, deren Bahndatensatz eine entsprechende Benutzerkennung aufweist. Ergänzend hierzu können Bahndaten bereitgestellt werden, die als öffentlich markiert sind oder die von anderen Benutzern an den Benutzer bereitgestellt wurden.

Durch das beschriebene Verfahren wird somit erreicht, dass ein bestimmter Benutzer durch ihn angelernte Trajektorien in mehreren Kraftfahrzeugen nutzen kann. Wird davon ausgegangen, dass ein einzelner Benutzer relativ wenige Trajektorien anlernt, ist es beispielsweise möglich, dass ein Benutzer manuell an einer Bedieneinrichtung des Kraftfahrzeugs, beispielsweise an der Anzeigeeinrichtung 8, die als Touchscreen ausgebildet sein kann, wählt, für welche der Trajektorien Führungsdatensätze berechnet werden sollen, nachdem eine Liste möglicher Trajektorien von der Speichereinrichtung 26 übertragen wurde oder dass er nach einer Übertragung von Führungsdatensätzen für alle durch ihn angelernten Trajektorien einen entsprechenden Führungsdatensatz auswählt, der, wie später erläutert, zur Führung des Kraftfahrzeugs dienen soll. Hierzu können den einzelnen Trajektorien beispielsweise Klartextnamen, beispielsweise Textstrings, zugeordnet sein. Alternativ ist es möglich, die einzelnen Trajektorien durch ihre Zielpunkte zu kennzeichnen.

Häufig ist es jedoch gewünscht, dass die Auswahl einer passenden Trajektorie automatisch erfolgt oder dass zumindest die Auswahlmöglichkeiten des Benutzers eingeschränkt werden, um ein langwieriges Blättern durch eine Vielzahl möglicher Trajektorien zu vermeiden. Daher ist es möglich, dass durch die Positionsbestimmungseinrichtung 24 eine Egoposition des Kraftfahrzeugs 1 ermittelt wird und an die Speichereinrichtung 26 übertragen wird, wo sie im Rahmen der Auswahl der wenigstens einen Trajektorie, für die ein Führungsdatensatz ermittelt werden soll, ausgewertet wird. Alternativ ist es selbstverständlich möglich, Führungsdatensätze für alle Trajektorien an das Kraftfahrzeug 1 zu übertragen, wonach die Steuereinrichtung 5 aus diesen Führungsdatensätzen in Abhängigkeit der Egoposition des Kraftfahrzeugs 1 eine oder mehrere auswählt.

Zur Auswahl von Trajektorien in Abhängigkeit der Egoposition sollen beispielhaft zwei Ansätze beschrieben werden, die selbstverständlich auch kombinierbar sind. Eine erste Möglichkeit, die Anzahl der Trajektorien zu reduzieren, ist es, Gruppen von Trajektorien, deren Bahndaten auf der Speichereinrichtung gespeichert sind, jeweils einer bestimmten Infrastruktureinrichtung oder einem bestimmten Gebiet zuzuordnen. In Abhängigkeit der Egoposition kann ermittelt werden, ob sich das Kraftfahrzeug in dem Gebiet oder in einem der Infrastruktureinrichtung zugeordneten Bereich befindet. In diesem Fall können ausschließlich jene Trajektorien im Rahmen der Bereitstellung der Führungsdatensätze berücksichtigt werden, die der Gruppe angehören. Beispielsweise können in der gezeigten Situation auch dann, wenn weitere Trajektorien angelernt wurden, nur die Trajektorien 9, 10 berücksichtigt werden, die der Garage 2 zugeordnet sind.

Alternativ oder ergänzend ist es möglich, den Trajektorien jeweils eine Positionsinformation zuzuordnen, die wenigstens eine der Trajektorien zugeordnete Position beschreibt. Bei dieser Position kann es sich beispielsweise um die Anfangs- und/oder Endpunkte 17 bis 23 der Segmente 11 bis 16, die Zielpositionen, die mit den Endpunkten 20, 23 übereinstimmen, oder andere Wegpunkte auf den Trajektorien 9, 10 handeln. Es können nur Führungsdatensätze für Trajektorien bereitgestellt werden, bei denen die Positionsinformation wenigstens eine Position beschreibt, deren Abstand zu der Egoposition des Kraftfahrzeugs unterhalb eines vorgegebenen Grenzwertes liegt. Dieser Grenzwert kann zudem richtungsabhängig sein und/oder es kann eine Ausrichtung des Kraftfahrzeugs berücksichtigt werden.

Ein weiterer Faktor, der für die Auswahl der Trajektorie relevant ist, zu der ein Führungsdatensatz bereitgestellt werden soll, ist, ob die entsprechende Trajektorie 9, 10 frei fahrbar ist oder ob sich ein zu berücksichtigendes Kraftfahrzeug 28 auf der Trajektorie 9, 10, insbesondere im Bereich der jeweiligen Zielposition, befindet. Beispielsweise wären in der in der Figur gezeigten Situation beide Trajektorien 9, 10 zunächst gleichwertig für das Kraftfahrzeug 1. Durch das zu berücksichtigende Kraftfahrzeug 28 kann jedoch eine Beleginformation, die die Position des zu berücksichtigenden Kraftfahrzeugs 28 angibt, an die Speichereinrichtung 26 übertragen werden. Diese kann somit im Rahmen der Bereitstellung des wenigstens einen Führungsdatensatzes ermitteln, dass die Zielposition der Trajektorie 10 durch das Kraftfahrzeug 28 belegt ist und somit einen Führungsdatensatz, der der freien Trajektorie 9 zugeordnet ist, an das Kraftfahrzeug 1 übertagen.

Wurde nur ein einzelner Führungsdatensatz an das Kraftfahrzeug 1 übertragen, können die Fahrzeugeinrichtungen 6 bis 8 anschließend unmittelbar oder nach einer Bestätigung durch einen Benutzer in Abhängigkeit dieses Führungsdatensatzes gesteuert werden. Beispielsweise kann das Kraftfahrzeug autonom entlang der Trajektorie 9 geführt werden, um auf dem Parkplatz 3 abgestellt zu werden oder es können über die Anzeigeeinrichtung 8 Fahranweisungen für eine entsprechende Führung an einen Fahrer ausgegeben werden.

Werden mehrere Führungsdatensätze an das Kraftfahrzeug 1 übertragen, so wird einer dieser Führungsdatensätze durch die Steuereinrichtung 5 des Kraftfahrzeugs 1 ausgewählt und dient anschließend zur Ansteuerung der Fahrzeugeinrichtungen 6 bis 8. Eine Auswahl kann manuell durch einen Benutzer, beispielsweise durch eine Bedieneingabe an der Anzeigeeinrichtung 8, die als Touchscreen ausgebildet ist, erfolgen. Es ist auch möglich, dass entsprechende Auswahlen durch einen von dem Kraftfahrzeug beabstandeten Benutzer, beispielsweise an einer mobilen Kommunikationseinrichtung, erfolgen. Zudem können die erläuterten Auswahlverfahren zur Auswahl von Trajektorien, für die Führungsdatensätze bereitgestellt werden sollen, auch nachgelagert im Kraftfahrzeug zur Auswahl der Führungsdatensätze genutzt werden.

Das erläuterte Verfahren ermöglicht es somit einerseits, durch ein Kraftfahrzeug 1 angelernte Trajektorien durch ein beliebiges weiteres Kraftfahrzeug 1 zu nutzen. Andererseits ermöglicht es eine automatische Auswahl einer der Trajektorien, die angelernt wurden, beziehungsweise unterstützt einen Benutzer bei einer solchen Auswahl.

Das Verfahren wurde im Rahmen eines relativ einfachen Beispiels, nämlich dem Fahren in eine Garage 2, erläutert. Es ist selbstverständlich möglich, dass Trajektorien durch eine Vielzahl von Nutzern angelernt werden und an eine Vielzahl von Kraftfahrzeugen bereitgestellt werden. Dies kann beispielsweise zweckmäßig sein, wenn ein Kraftfahrzeug auf einer öffentlichen Parkfläche oder in einem Parkhaus automatisch geparkt werden soll. In diesem Fall können Trajektorien zu einer Vielzahl von Parkplätzen durch eine Vielzahl verschiedener Kraftfahrzeuge mit verschiedenen Benutzern angelernt werden. Die Parkfläche beziehungsweise das Parkhaus kann Sensoren aufweisen, die ermitteln, ob Parkplätze frei oder belegt sind. Zudem kann eine parkplatz- beziehungsweise parkflächenseitige Speichereinrichtung vorgesehen sein oder eine separat davon vorgesehene Speichereinrichtung kann berücksichtigen, dass sich das Kraftfahrzeug im Bereich der Parkfläche beziehungsweise des Parkhauses befindet. In diesem Fall kann ein Führungsdatensatz für das Kraftfahrzeug bereitgestellt werden, der zur Führung des Kraftfahrzeugs zu einem der freien Parkplätze dient.

## Patentansprüche

1. Verfahren zum Betrieb eines Kraftfahrzeugs (1), umfassend die Schritte:
- Ermitteln wenigstens eines eine jeweilige gefahrene Trajektorie (9, 10) eines jeweiligen weiteren Kraftfahrzeugs beschreibenden Bahndatensatzes und senden des Bahndatensatzes an eine fahrzeugexterne Speichereinrichtung (26), wobei bei der Ermittlung des Bahndatensatzes zusätzlich ein die Fahrzeuggeometrie des die Trajektorie (8, 9) befahrenden Kraftfahrzeugs (1) beschreibender Fahrgeometrieparameter erfasst und an die Speichereinrichtung (26) gesendet wird,
- Bereitstellen wenigstens eines Führungsdatensatzes für das Kraftfahrzeug (1) durch die Speichereinrichtung (26), wobei jeder Führungsdatensatz einer der Trajektorien (9, 10) zugeordnet ist und in Abhängigkeit des die jeweilige zugeordnete Trajektorie (9, 10) beschreibenden Bahndatensatzes ermittelt wird, und
- Ansteuern der Fahrzeugeinrichtung (6, 7, 8) des Kraftfahrzeugs (1) in Abhängigkeit des bereitgestellten Führungsdatensatzes oder, falls mehrere der Führungsdatensätze durch die Speichereinrichtung (26) bereitgestellt werden, eines kraftfahrzeugseitig ausgewählten der bereitgestellten Führungsdatensätze zur Ausgabe eines die zugeordnete Trajektorie (9, 10) betreffenden Fahrhinweises an einen Fahrer des Kraftfahrzeugs (1) und/oder zur Durchführung wenigstens eines Fahreingriffs,
wobei die Ermittlung des wenigstens einen Führungsdatensatzes und/oder die Steuerung der Fahrzeugeinrichtung (6, 7, 8) in Abhängigkeit des Fahrgeometrieparameters erfolgt.

2. Verfahren nach Anspruch 1,
**dadurch gekennzeichnet,**
**dass** Bahndatensätze für mehrere Trajektorien (9, 10) ermittelt werden, wobei den Trajektorien (9, 10) jeweils wenigstens eine Positionsinformation zugeordnet wird, die wenigstens eine der Trajektorie zugeordnete Position beschreibt, wobei ein Auswahlkriterium, das zur Auswahl der wenigstens einen Trajektorie (9, 10), zu der der jeweilige zugeordnete Führungsdatensatz ermittelt und bereitgestellt wird, und/oder zur Auswahl des zur Steuerung der Fahrzeugeinrichtung (6, 7, 8) verwendeten Führungsdatensatzes verwendet wird, von den Positionsinformationen abhängt.

3. Verfahren nach Anspruch 2,
**dadurch gekennzeichnet,**
**dass** durch eine Positionserfassungseinrichtung (24) des Kraftfahrzeugs (1) eine die Egoposition des Kraftfahrzeugs (1) beschreibende Egopositionsinformation ermittelt wird, wobei das Auswahlkriterium zusätzlich von der Egopositionsinformation abhängt.

4. Verfahren nach Anspruch 2 oder 3,
**dadurch gekennzeichnet,**
**dass** die Positionsinformationen jeweils eine Zielposition beschreiben, an der die jeweilige Trajektorie (8, 9) endet, wobei das Auswahlkriterium von den Zielpositionen abhängt.

5. Verfahren nach einem Ansprüche 2 bis 4,
**dadurch gekennzeichnet,**
**dass** das Auswahlkriterium zusätzlich von einer an einer Bedieneinrichtung des Kraftfahrzeugs (1) erfassten Bedieneingabe eines Benutzers abhängt.

6. Verfahren nach einem der vorangehenden Ansprüche,
**dadurch gekennzeichnet,**
**dass** eine Beleginformation ermittelt wird, die eine durch ein zu berücksichtigendes Kraftfahrzeug (28) belegte Position beschreibt, wonach die Auswahl der wenigstens einen Trajektorie (9, 10), zu der ein zugeordneter Führungsdatensatz ermittelt und bereitgestellt wird, und/oder die Auswahl des zur Steuerung der Fahrzeugeinrichtung (6, 7, 8) verwendeten Führungsdatensatzes von der Beleginformation abhängt.

7. Verfahren nach einem der vorangehenden Ansprüche,
**dadurch gekennzeichnet,**
**dass** der Bahndatensatz und/oder der Führungsdatensatz jeweils für wenigstens ein Segment (11 - 16) der Trajektorie (9, 10) Koordinaten eines Anfangs- und/oder eines Endpunktes (17 - 23) des jeweiligen Segments (11 - 16) und/oder eine Bahnkrümmung und/oder einen Lenkwinkel in dem jeweiligen Segment (11 - 16) beschreiben.

8. Verfahren nach einem der vorangehenden Ansprüche,
**dadurch gekennzeichnet,**
**dass** die Ermittlung des wenigstens einen Führungsdatensatzes und/oder die Steuerung der Fahrzeugeinrichtung (6, 7, 8) zusätzlich in Abhängigkeit wenigstens eines eine Fahrgeometrie des Kraftfahrzeugs (1) betreffenden weiteren Fahrgeometrieparameters erfolgen.

9. Verfahren nach Anspruch 8,
**dadurch gekennzeichnet, dass** der weitere Fahrgeometrieparameter einen Achsabstand und/oder einen Wendekreis und/oder einen maximalen Lenkwinkel des Kraftfahrzeugs (1) beschreibt.

10. Verfahren nach einem der vorangehenden Ansprüche,
**dadurch gekennzeichnet,**
**dass** Bahndatensätze für mehrere Trajektorien (8, 9) ermittelt werden, wobei den Bahndatensätzen jeweils wenigstens eine von mehreren Benutzerkennungen zugeordnet wird, wobei einem Benutzer des Kraftfahrzeugs (1) eine dieser Benutzerkennungen zugeordnet ist, die durch das Kraftfahrzeug (1) erfasst wird, wonach im Rahmen der Bereitstellung der Führungsdaten ausschließlich Bahndaten berücksichtigt werden, die der erfassten Benutzerkennung oder wenigstens einer vorgegebenen Benutzerkennung zugeordnet sind.

11. Verfahren nach einem der vorangehenden Ansprüche,
**dadurch gekennzeichnet,**
**dass** wenigstens eine Gruppe von Trajektorien (8, 9), deren Bahndaten auf der Speichereinrichtung (26) gespeichert sind, einer bestimmten Infrastruktureinrichtung oder einem bestimmten Gebiet zugeordnet ist, wobei durch die oder eine Positionserfassungseinrichtung (24) des Kraftfahrzeugs (1) ermittelt wird, ob sich das Kraftfahrzeug (1) in dem Gebiet oder in einem der Infrastruktureinrichtung zugeordneten Bereich befindet, wobei in diesem Fall alle der Gruppe der Trajektorien (8, 9) zugeordneten Führungsdatensätze an das Kraftfahrzeug (1) übermittelt werden und/oder im Rahmen der Bereitstellung der Führungsdatensätze ausschließlich Trajektorien (8, 9) berücksichtigt werden, die der Gruppe angehören.

12. Kraftfahrzeug
**dadurch gekennzeichnet,**
**dass** es zur Teilnahme an dem Verfahren gemäß einem der vorangehenden Ansprüche als das Kraftfahrzeug (1) und/oder als das weitere Kraftfahrzeug eingerichtet ist.

13. Speichereinrichtung,
**dadurch gekennzeichnet,**
**dass** sie zur Teilnahme an dem erfindungsgemäßen Verfahren als die Speichereinrichtung (26) eingerichtet ist.

## Claims

1. Method for operating a motor vehicle (1), comprising the steps:
- ascertaining at least one path data record describing a respective travelled trajectory (9, 10) of a respective further motor vehicle and sending the path data record to a vehicle-external memory device (26), wherein in the ascertaining of the path data record a driving geometry parameter describing the vehicle geometry of the motor vehicle (1) travelling the trajectory (8, 9) is additionally detected and transmitted to the memory device (26),
- providing at least one guidance data record for the motor vehicle (1) from the memory device (26), each guidance data record being associated with one of the trajectories (9, 10) and being ascertained on the basis of the path data record describing the respective associated trajectory (9, 10), and
- actuating the vehicle device (6, 7, 8) of the motor vehicle (1) on the basis of the provided guidance data record, or, if multiple instances of the guidance data records are provided by the memory device (26), of one of the provided guidance data records that is selected by the vehicle, to output a driving instruction relating to the associated trajectory (9, 10) to a driver of the motor vehicle (1) and/or to perform at least one driving intervention,
wherein the ascertaining of the at least one guidance data record and/or the control of the vehicle device (6, 7, 8) is effected on the basis of the driving geometry parameter.

2. Method according to claim 1,
**characterised in**
**that** path data records for multiple trajectories (9, 10) are ascertained, wherein at least one item of position information describing at least one position associated with the trajectory is in each case associated with the trajectories (9, 10), wherein a selection criterion used to select the at least one trajectory (9, 10), for which the respective associated guidance data record is ascertained and provided, and/or to select the guidance data record used to control the vehicle device (6, 7, 8) depends on the position information.

3. Method according to claim 2,
**characterised in**
**that** an item of ego position information describing the ego position of the motor vehicle (1) is ascertained by a position detection device (24) of the motor vehicle (1), wherein the selection criterion depends additionally on the ego position information.

4. Method according to claim 2 or 3,
**characterised in**
**that** the position information describes in each case a target position at which the respective trajectory (8, 9) ends, wherein the selection criterion depends on the target positions.

5. Method according to any one of claims 2 to 4,
**characterised in**
**that** the selection criterion depends additionally on an operating input of a user detected on an operating device of the motor vehicle (1).

6. Method according to any one of the preceding claims,
**characterised in**
**that** an item of occupancy information describing a position occupied by a motor vehicle (28) to be taken into consideration is ascertained, whereby the selection of the at least one trajectory (9, 10), for which an associated guidance data record is ascertained and provided, and/or the selection of the guidance data record used to control the vehicle device (6, 7, 8) depends on the occupancy information.

7. Method according to any one of the preceding claims,
**characterised in**
**that** the path data record and/or the guidance data record describe respectively, for at least one segment (11-16) of the trajectory (9, 10), coordinates of a starting point and/or of an end point (17-23) of the respective segment (11-16) and/or a path curvature and/or a steering angle in the respective segment (11-16).

8. Method according to any one of the preceding claims,
**characterised in**
**that** the ascertaining of the at least one guidance data record and/or the control of the vehicle device (6, 7, 8) are effected additionally on the basis of at least one further driving geometry parameter relating to a driving geometry of the motor vehicle (1).

9. Method according to claim 8,
**characterised in that** the further driving geometry parameter describes a wheelbase and/or a turning circle and/or a maximum steering angle of the motor vehicle (1).

10. Method according to any one of the preceding claims,
**characterised in**
**that** path data records are ascertained for multiple trajectories (8, 9), wherein at least one of multiple user identifications is associated with each of the path data records, wherein one of these user identifications is associated with a user of the motor vehicle (1), said user identification being detected by the motor vehicle (1), whereby, within the framework of the provision of the guidance data, only path data associated with the detected user identification or at least one given user identification are taken into account.

11. Method according to any one of the preceding claims,
**characterised in**
**that** at least one group of trajectories (8, 9), the path data of which are stored on the memory device (26), is associated with a certain infrastructure device or a certain territory, wherein it is ascertained by the or a position detection device (24) of the motor vehicle (1), whether the motor vehicle (1) is located in the territory or in a region associated with the infrastructure device, wherein in this case all the guidance data records associated with the group of the trajectories (8, 9) are transmitted to the motor vehicle (1) and/or, within the framework of the provision of the guidance data records, only trajectories (8, 9) belonging to the group are taken into account.

12. Motor vehicle
**characterised in**
**that**, for participation in the method according to any one of the preceding claims, it is configured as the motor vehicle (1) and/or as the further motor vehicle.

13. Memory device,
**characterised in**
**that**, for participation in the method according to the invention, it is configured as the memory device (26).

## Revendications

1. Procédé pour faire fonctionner un véhicule automobile (1), comprenant les étapes de :
- détermination d'au moins un ensemble de données de parcours décrivant une trajectoire (9, 10) parcourue respective d'un autre véhicule automobile respectif et envoi de l'ensemble de données de parcours à un dispositif de stockage (26) externe au véhicule, dans lequel lors de la détermination de l'ensemble de données de parcours un paramètre de géométrie de conduite décrivant la géométrie de véhicule du véhicule automobile (1) parcourant la trajectoire (8, 9) est détecté en plus et envoyé au dispositif de stockage (26),
- mise à disposition d'au moins un ensemble de données de guidage pour le véhicule automobile (1) par le dispositif de stockage (26), dans lequel chaque ensemble de données de guidage est associé à une des trajectoires (9, 10) et est déterminé en fonction de l'ensemble de données de parcours décrivant la trajectoire (9, 10) parcourue respective, et
- commande du dispositif de véhicule (6, 7, 8) du véhicule automobile (1) en fonction de l'ensemble de données de guidage mis à disposition ou, si plusieurs des ensembles de données de guidage sont mis à disposition par le dispositif de stockage (26), d'un des ensembles de données de guidage mis à disposition sélectionné côté véhicule automobile pour l'édition d'une indication de conduite concernant la trajectoire (9, 10) associée à un conducteur du véhicule automobile (1) et/ou pour la réalisation d'au moins une intervention de conduite,
dans lequel la détermination de l'au moins un ensemble de données de guidage et/ou la commande du dispositif de véhicule (6, 7, 8) a lieu en fonction du paramètre de géométrie de conduite.

2. Procédé selon la revendication 1,
**caractérisé en ce**
**que** des ensembles de données de parcours sont déterminés pour plusieurs trajectoires (9, 10), dans lequel respectivement au moins une information de position est associée aux trajectoires (9, 10), qui décrit au moins une position associée à la trajectoire, dans lequel un critère de sélection, qui est utilisé pour la sélection de l'au moins une trajectoire (9, 10), pour laquelle l'ensemble de données de guidage associé respectif est déterminé et mis à disposition, et/ou pour la sélection de l'ensemble de données de guidage utilisé pour la commande du dispositif de véhicule (6, 7, 8), dépend des informations de position.

3. Procédé selon la revendication 2,
**caractérisé en ce**
**qu'**une information de position Ego décrivant la position Ego du véhicule automobile (1) est déterminée par un dispositif de détection de position (24) du véhicule automobile (1), dans lequel le critère de sélection dépend en plus de l'information de position Ego.

4. Procédé selon la revendication 2 ou 3,
**caractérisé en ce**
**que** les informations de position décrivent respectivement une position cible, à laquelle termine la trajectoire (8, 9) respective, dans lequel le critère de sélection dépend des positions cible.

5. Procédé selon l'une quelconque des revendications 2 à 4,
**caractérisé en ce**
**que** le critère de sélection dépend en plus d'une saisie de commande d'un utilisateur détectée au niveau d'un dispositif de commande du véhicule automobile (1).

6. Procédé selon l'une quelconque des revendications précédentes,
**caractérisé en ce**
**qu'**une information d'occupation est déterminée, qui décrit une position occupée par un véhicule automobile (28) à prendre en compte, selon laquelle la sélection de l'au moins une trajectoire (9, 10), pour laquelle un ensemble de données de guidage associé est déterminé et mis à disposition, et/ou la sélection de l'ensemble de données de guidage utilisé pour la commande du dispositif de véhicule (6, 7, 8) dépend de l'information d'occupation.

7. Procédé selon l'une quelconque des revendications précédentes,
**caractérisé en ce**
**que** l'ensemble de données de parcours et/ou l'ensemble de données de guidage décrivent respectivement pour au moins un segment (11 - 16) de la trajectoire (9, 10) des coordonnées d'un point de début et/ou d'un point de fin (17 - 23) du segment (11 - 16) respectif et/ou une courbure de parcours et/ou un angle de braquage dans le segment (11 - 16) respectif.

8. Procédé selon l'une quelconque des revendications précédentes,
**caractérisé en ce**
**que** la détermination de l'au moins un ensemble de données de guidage et/ou la commande du dispositif de véhicule (6, 7, 8) ont lieu en plus en fonction d'au moins un autre paramètre de géométrie de conduite concernant une géométrie de conduite du véhicule automobile (1).

9. Procédé selon la revendication 8,
**caractérisé en ce que** l'autre paramètre de géométrie de conduite décrit un empattement et/ou un rayon de braquage et/ou un angle de braquage maximum du véhicule automobile (1).

10. Procédé selon l'une quelconque des revendications précédentes,
**caractérisé en ce**
**que** des ensembles de données de parcours sont déterminés pour plusieurs trajectoires (8, 9), dans lequel respectivement au moins un de plusieurs identifiants utilisateur est associé aux ensemble de données de parcours, dans lequel un de ces identifiants utilisateur est associé à un utilisateur du véhicule automobile (1), qui est détecté par le véhicule automobile (1), selon lequel exclusivement des données de parcours sont prises en compte dans le cadre de la mise à disposition des données de guidage, qui sont associées à l'identifiant utilisateur détecté ou au moins à un identifiant utilisateur prédéfini.

11. Procédé selon l'une quelconque des revendications précédentes,
**caractérisé en ce**
**qu'**au moins un groupe de trajectoires (8, 9), dont les données de parcours sont enregistrées sur le dispositif de stockage (26), est associé à un dispositif d'infrastructure déterminé ou à une région déterminée, dans lequel il est déterminé par le ou un dispositif de détection de position (24) du véhicule automobile (1) si le véhicule automobile (1) se trouve dans la région ou dans une zone associée au dispositif d'infrastructure, dans lequel dans ce cas tous les ensembles de données de guidage associés au groupe de trajectoires (8, 9) sont transmis au véhicule automobile (1) et/ou exclusivement des trajectoires (8, 9), qui appartiennent au groupe, sont prises en compte dans le cadre de la mise à disposition des ensembles de données de guidage.

12. Véhicule automobile,
**caractérisé en ce**
**qu'**il est aménagé pour participer au procédé selon l'une quelconque des revendications précédentes en tant que véhicule automobile (1) et/ou en tant qu'autre véhicule automobile.

13. Dispositif de stockage,
**caractérisé en ce**
**qu'**il est aménagé pour participer au procédé selon l'invention en tant que dispositif de stockage (26).
